# EUROPÄISCHE PATENTSCHRIFT

(11) **EP 0 745 097 B1**
(45) Veröffentlichungstag und Bekanntmachung des Hinweises auf die Patenterteilung: **21.01.1998**
(21) Anmeldenummer: 95907657.1
(22) Anmeldetag: 09.02.1995
(51) Int. Cl.: C08F 2/26, B01F 17/34

(54) **VERFAHREN ZUR HERSTELLUNG VON EMULSIONSPOLYMERISATEN**
PROCESS FOR PRODUCING EMULSION POLYMERS
PROCEDE DE PREPARATION DE POLYMERES EN EMULSION

(30) Priorität: 18.02.1994 DE 4405204
(43) Veröffentlichungstag der Anmeldung: 04.12.1996
(73) Patentinhaber: Henkel Kommanditgesellschaft auf Aktien, 40191 Düsseldorf (DE)
(72) Erfinder: FEUSTEL, Dieter, D-40789 Monheim (DE); EICKEN, Ulrich, D-41352 Korschenbroich (DE); ENGELS, Thomas, D-50226 Frechen (DE)
(86) Internationale Anmeldenummer: EP9500461
(87) Internationale Veröffentlichungsnummer: WO9522564

(56) Entgegenhaltungen:
- EP-A- 0 020 906
- DE-A- 2 904 395
- GB-A- 1 382 314
- US-A- 2 454 546
- US-A- 2 489 943

## Beschreibung

### Gebiet der Erfindung

Die Erfindung betrifft ein Verfahren zur Herstellung von Emulsionspolymerisaten in Gegenwart von Primär- und Sekundärstabilisatoren, die Sulfogruppen enthaltende Polyester mit verbesserter biologischer Abbaubarkeit darstellen.

### Stand der Technik

Polymerdispersionen werden gewöhnlich nach dem Verfahren der Emulsionspolymerisation durch Polymerisation wasserunlöslicher Monomerer in wäßriger Phase in Gegenwart von Emulgier- oder Dispergierhilfsmitteln hergestellt. Das Verfahren kann zur Herstellung von Polymerdispersionen aus praktisch allen wasserunlöslichen oder nur partiell wasserlöslichen Monomeren wie beispielsweise Acrylsäure- oder Methacrylsäureestern, Vinylestern, Styrol, Butadien, Chloropren, Acrylnitril oder Vinylchlorid eingesetzt werden.

In der Regel werden oberflächenaktive Substanzen als Emulgatoren eingesetzt, die den Ablauf der Polymerisation kontrollieren und das entstandene Produkt stabilisieren.

Unter Stabilisierung wird die Verhinderung des Koagulierens einzelner Polymerpartikel in den Dispersionen zu größeren Agglomeraten verstanden. Das Verfahren der Emulsionspolymerisation ist seit Jahrzehnten bekannt und ist in Standardwerken hinreichend beschrieben (s. z.B. Römpp Chemie Lexikon, 9. Auflage, (1990), Thieme Verlag, Band 2, Seite 1159 und die darin zitierte Literatur).

Die Emulsionspolymerisation wird zur Herstellung von Polymeren eingesetzt, die sowohl als Dispersionen, z.B. in Bindemitteln für Farben oder Klebstoffe, als auch als Quelle für Kunststoffe oder Elastomere in Masse benutzt werden.

Bei der Herstellung von Kunststoffen oder Elastomeren in Masse werden die Polymerdispersionen gewöhnlich getrocknet, um den Wasseranteil zu entfernen und den Kunststoff oder das Elastomer in möglichst reiner Form zu gewinnen. Zur Gewinnung des Kunstoffes oder der Elastomeren werden häufig die Sprühtrocknung oder die Koagulation mit anschließender Trocknung eingesetzt. Zur der nach diesem Verfahren notwendigen Zerstörung der Dispersionen werden keine besonders stabilen Polymerdispersionen benötigt. Es werden daher bevorzugt solche Emulgatoren eingesetzt, die zwar die problemlose Herstellung der Dispersion erlauben, aber anschließend deren Zerstörung nicht unnötig erschweren. Besondere Vorteile bieten solche Emulgatoren, die gezielt chemisch so modifiziert werden können, daß sie ihre oberflächenaktiven und stabilisierenden Eigenschaften vollständig verlieren. Hierdurch ist es möglich, die im allgemeinen unerwünschte Beeinflussung des Endprodukts (wie z.B. Wasserempfindlichkeit oder fehlende Thermostabilität) durch die zurückbleibenden Emulgatoren im Produkt zu vermeiden.

Dieses Verfahren wird insbesondere bei der Elastomerenherstellung angewandt, wo Fett- oder Harzseifen als Emulgatoren eingesetzt werden, die durch pH-Erniedrigung in nicht oberflächenaktive Verbindungen verwandelt werden können. Der mit Seifen hergestellte und stabilisierte Latex kann durch pH-Erniedrigung teilweise oder vollständig koaguliert werden, wobei die Fettsäuren als gewünschte Additive im Elastomeren verbleiben und keinerlei negativen Einfluß als Emulgator mehr ausüben.

Im Vergleich zu anderen Standardemulgatoren wie Alkylsulfaten oder -sulfonaten sind die Seifen jedoch schlechtere Emulgatoren, d.h. ihr Einsatz erlaubt zwar die Durchführung einer Polymerisation, aber bedingt durch Scherkräfte, Siedeprozesse oder andere mechanische Einflüsse tritt bereits während der Emulsionsherstellung oder der Restmonomerentfernung ein erheblicher Anteil an koaguliertem Polymeren auf. Die koagulierten Anteile verunreinigen die Polymerisationsanlage mit jedem Ansatz und machen ihre ständige Reinigung erforderlich. Da die Reinigung der Anlage eine geringere Kapazität zur Folge hat, wurde versucht, mit Hilfe von Sekundärstabilisatoren (Costabilisatoren) die Bildung von Koagulat zu verringern.

Für die Synthese von Latices unter Einsatz von Styrol, Butadien und Chloropren sind wasserlösliche Sekundärstabilisatoren des Typs Naphthalinsulfonsäure-Formaldehyd-Kondensate bereits seit langer Zeit bekannt. Diese werden den Latices vor, während oder nach der Herstellung zugesetzt. Sie verhindern die Bildung nennenswerter Mengen an Koagulat bei der Emulsionspolymerisation, adsorbieren jedoch im Gegensatz zu den Emulgatoren nur sehr schwach auf der Oberfläche der Polymerpartikel im Latex, so daß sie nach der gezielten Koagulation des Latex zur Gewinnung des Elastomeren wieder ausgewaschen werden können.

In der Literatur sind mehrere Verfahren für den Einsatz von Naphthalinsulfonsäure-Formaldehyd-Kondensaten beschrieben. In Styrol oder Styrol-Butadien-Systemen werden die Sekundärstabilisatoren in Konzentrationen von ca. 0,05 bis 0,5 % eingesetzt. Rezepturbeispiele finden sich in US-PS-2 470 629 oder Chemical Economical Handbook, Styrene-Butadiene-Elastomers, April 1991, 525.3600G.

Bei der Polychloropren-Herstellung (s. Ullmann Enzyklopädie der Technischen Chemie, 3. Auflage, 9. Band, Seite 337), werden bis zu 0,75 % der Sekundärstabilisatoren eingesetzt. Zur Gewinnung von Polychloropren wird der Latex zunächst durch Ansäuern destabilisiert und anschließend durch eine Gefrierkoagulation ausgefällt wie in Ind. Eng. Chem., 40, 2193 (1948) und Chem. Eng. Prog, 43, 391 (1947) beschrieben. Anschließend wird das gefrierkoagulierte Elastomer gewaschen und der Sekundärstabilisator entfernt.

Das nach dem Koagulationsprozeß anfallende Waschwasser enthält den größten Teil der dem Polymerisationsprozeß zugesetzten Sekundärstabilisatoren. Diese fungieren auch im Waschwasser als hervorragende Dispergiermittel, die alle möglichen hydrophoben Partikel solubilisieren können.

Insbesondere wenn diese Stoffe in Kläranlagen gelangen, kann die Sedimentation der Schwebestoffe verhindert werden. Da Naphthalinsulfonsäure-Formaldehyd-Kondensate biologisch nicht abbaubare polymere Substanzen darstellen, bleibt ihre Wirkung über den gesamten Klärprozeß erhalten. Durch die Verhinderung der Sedimentation des Klärschlamms kann die Funktion der Kläranlage erheblich beeinträchtigt werden.

Unter ökologischen Gesichtspunkten ist es daher wünschenswert, die Klasse der Naphthalinsulfonsäure-Formaldehyd-Kondensate durch ähnlich wirksame, aber besser biologisch abbaubare Substanzen zu ersetzen.

Ein Versuch, derartige Alternativen für Stabilisatoren für die Emulsionspolymerisation am Beispiel der Herstellung von Chloropren zu finden, ist in der DE-OS-2 210 957 beschrieben.

Als die am besten geeignete Substanz wird Octylsulfat angegeben, das den Latex ausreichend stabilisiert, ausgewaschen werden kann und wenig schäumt. Trotz dieses Eigenschaftsbildes ist das Produkt wenig geeignet als Ersatz für Naphthalinsulfonsäure-Formaldehyd-Kondensate, da diese Produkte im Gegensatz zu Octylsulfat die Oberflächenspannung nicht reduzieren.

Sulfobernsteinsäure-Einheiten enthaltende Polyester sind ebenfalls bekannt.

In der US-PS-24 54 546 werden Polyester aus Sulfobernsteinsäure und Diolen mit 6 bis 18 C-Atomen beschrieben. Diese Polyester können für die Stabilisierung von O/W-Emulsionen verwendet werden, unter anderem auch für die Stabilisierung von polymerisierbarem Material vor der Polymerisation. Eine genaue Ausführungsvorschrift zur Durchführung der Polymerisationen wird in dieser Schrift nicht gegeben.

In der US-PS-24 89 943 werden Polyester aus 2-Ethylhexan-1,3-diol und Sulfobernsteinsäure als nichtschäumende Dispergiermittel für die Emulsionspolymerisation beschrieben, die die Nachteile von sulfonierten Formaldehyd-Naphthalin-Kondensaten wie Vergilbung und Verfärbungen nicht aufweisen. Nach der dort gegebenen Lehre werden die Polyester als alleiniges Emulgiermittel bei der Emulsionspolymerisation verwendet. Über ihre biologische Abbaubarkeit werden keine Angaben gemacht.

In der DE-OS-16 17 123 werden Polyester aus Sulfobernsteinsäure und Diolen mit 2 bis 4 C-Atomen als Vergrauungsinhibitoren für Waschmittel beansprucht.

Die DE-OS-25 06 156 beschreibt Polyester aus Diolen, ungesättigten Dicarbonsäuren und gesättigten Dicarbonsäuren, in die durch Addition von Hydrogensulfit an die Doppelbindungen der ungesättigten Dicarbonsäuren Sulfogruppen eingeführt wurden. Die Polyester werden zur Herstellung wäßriger Dispersionen von Feststoffen verwendet, speziell als Hilfsmitttel für die Färbung von Textilfasern.

Die DE-OS-29 04 395 beschreibt Polyester aus Diolen mit 2 bis 8 C-Atomen, ggf. cyclischen Diolen oder Polyalkylenglykolen, ungesättigten Dicarbonsäuren, ggf. gesättigten Dicarbonsäuren und einer Dicarbonsäure, die durch Addition von Acrylsäure an Linolsäure erhältlich ist. Die Einführung der Sulfogruppen in das Polymer erfolgt durch Addition von Hydrogensulfit an die Doppelbindungen der ungesättigten Dicarbonsäuren. Die Polyester werden zur Herstellung von wäßrigen Dispersionen von Farbstoffen verwendet. In der Schrift wird erwähnt, daß die Polyester im allgemeinen gut abbaubar sind. Nähere Hinweise, ob darunter eine biologische Abbaubarkeit zu verstehen ist oder experimentelle Belege finden sich nicht.

DE-OS-35 19 678 beschreibt Polyester aus Carbonsäuredialkanolamiden und Sulfodicarbonsäuren als Dispergiermittel für Kohlesuspensionen.

DE-OS-39 39 918 beschreibt Polyester, die aus Dicarbonsäuren wie Sulfobernsteinsäure und Diolen mit Molekulargewichten von 2.000 bis 100.000 hergestellt werden als geeignete Emulgatoren für die Emulsionspolymerisation. Als Stabilisatoren müssen sie jedoch analog den Primärstabilisatoren (z.B. Seifen) Agglomerate bilden, weshalb höchstens 50 % der Monomeren Sulfat- bzw. Sulfonatgruppen enthalten. Als Sekundärstabilisatoren sind derartige Polyester wegen ihrer Agglomeratbildung ungeeignet.

Die Aufgabe der vorliegenden Erfindung ist es, ein Verfahren zur Herstellung von Emulsionspolymerisaten zur Verfügung zu stellen, in welchem neben einem Primärstabilisator ein Sekundärstabilisator eingesetzt wird, der ein ausgewogenes Verhältnis von Hydrolysestabilität und damit verbundener Stabilisierungswirkung und Hydrolyselablität und damit verbundener biologischer Abbaubarkeit aufweist.

Weitere Anforderungen an den Sekundärstabilisator sind, daß er die Polymerdispersion stabilisiert und aus dem Koagulat auswaschbar ist, die Oberflächenspannung von Wasser nicht oder nur unwesentlich reduziert, also keine oder nur geringe Netzeigenschaften aufweist und ferner die Viskosität des Reaktionsgemisches nicht zusätzlich erhöht.

### Beschreibung der Erfindung

Diese Aufgabe wurde erfindungsgemäß gelöst durch ein Verfahren zur Herstellung von Emulsionspolymerisaten in Gegenwart eines Primärstabilisators aus Seife, basierend auf nativen oder synthetischen Fett- oder Harzsäuren und eines Sekundärstabilisators, wobei als biologisch abbaubarer Sekundärstabilisator Sulfogruppen enthaltende Polyester aus
a) Diolen
b) Dicarbonsäuren mit olefinischen Doppelbindungen, ausgewählt aus Malein- und/oder Furmarsäure, wobei 50 - 100 mol % der im Polyester enthaltenen Dicarbonsäuren mit Doppelbindungen sulfitiert sind, in Mengen von 99 bis 70 mol % - bezogen auf die Gesamtmenge an Dicarbonsäuren - und
c) Dicarbonsäuren ohne olefinische Doppelbindungen und ohne Sulfogruppen mit 2, 3 oder 5 - 18 C-Atomen in Mengen von 1 bis 30 mol % - bezogen auf die Gesamtmenge an Dicarbonsäure - eingesetzt werden.

Die Herstellung der Polyester für das erfindungsgemäße Verfahren kann nach an sich bekannten Methoden erfolgen.

Beispielsweise können die Dicarbonsäuren mit Sulfogruppen, die Dicarbonsäuren ohne Sulfogruppen und die Diole in einer Veresterungsreaktion zu Polyestern umgesetzt werden.

Ebenso ist es möglich, diese Polyester durch eine Umesterungsreaktion der Diole mit Estern der genannten Dicarbonsäuren mit niedrigen Alkoholen, wie z.B. Methanol, Ethanol, Propanol und Butanol herzustellen.

Die Einführung der Sulfogruppen kann auch durch Anlagerung von Hydrogensulfit-Resten an olefinische Doppelbindungen enthaltende Dicarbonsäurereste erfolgen. Die dafür notwendigen, olefinische Doppelbindungen enthaltenden Polyester können aus olefinische Doppelbindungen enthaltenden Dicarbonsäuren, Dicarbonsäuren ohne Sulfogruppen und Diolen auf an sich übliche Weise durch Veresterung oder Umesterung hergestellt werden.

Als geradkettiges oder verzweigtes 2 bis 10 Kohlenstoffatome enthaltendes Diol kommen bevorzugt 1,2-Ethandiol, 1,2-Propandiol, 1,3-Propandiol, 1,2-Butandiol, 1,3-Butandiol, 1,4-Butandiol, 1,5-Pentandiol, 2-Methyl-1,4-butandiol, 2,2-Dimethyl-1,3-propandiol, 1,6-Hexandiol, 1,10-Decandiol und 1,4-Dihydroxymethyl-cyclohexan oder Gemische davon in Frage. Auch die Additionsprodukte von 1 bis 5 mol Ethylen- oder Propylenoxid an die oben genannten Diole sind geeignet.

Es ist ebenfalls möglich, die Additionsprodukte von Ethylen- und/oder Propylenoxid an difunktionelle Phenole, z.B. an Hydrochinon, Resorcin, Bisphenol A, Bisphenol F oder Bisphenol S, einzusetzen.
Bevorzugt werden die kommerziell erhältlichen Additionsprodukte von Ethylen- und/oder Propylenoxid an Bisphenol A verwendet.

Es sind sowohl aromatische, wie z.B. Sulfoisophthalsäure, als auch aliphatische Dicarbonsäuren mit Sulfogruppen verwendbar. Bevorzugt wird Sulfobernsteinsäure verwendet.

Die molaren Mengen an Dicarbonsäure mit Sulfogruppen liegen zwischen 70 und 99 mol%, bevorzugt zwischen 90 und 99 mol% - bezogen auf die Gesamtmenge an Dicarbonsäure.

Beispiele für Dicarbonsäuren ohne olefinische Doppelbindungen sind Oxalsäure, Malonsäure, Glutarsäure, Adipinsäure, Korksäure, Sebacinsäure, 1,11-Undecandisäure, 1,12-Dodecandisäure, Phthalsäure, Isophthalsäure, Terephthalsäure, Hexahydrophthalsäure, Tetrahydrophthalsäure oder Dimerfettsäure. Bevorzugt werden lineare, aliphatische Dicarbonsäuren mit 2, 3 oder 5 bis 18 C-Atomen, besonders bevorzugt Adipinsäure verwendet.

Die molaren Mengen an Dicarbonsäure ohne Sulfogruppen liegen zwischen 1 und 30 mol%, bevorzugt zwischen 1 und 10 mol% - bezogen auf die Gesamtmenge an Dicarbonsäure.

Wenn die Einführung von Sulfogruppen über die Addition von Hydrogensulfit an olefinische Doppelbindungen erfolgen soll, können olefinische Doppelbindungen enthaltende Dicarbonsäuren oder ihre funktionellen Derivate wie Anhydride oder Ester von niederen Alkoholen, in Abmischung mit anderen, keine olefinischen Doppelbindungen enthaltenden Dicarbonsäuren oder deren Derivaten zur Herstellung von Polyestern eingesetzt werden.

Die molaren Mengen an Dicarbonsäure mit olefinischer Doppelbindung liegen zwischen 70 und 99 mol%, bevorzugt zwischen 90 und 99 mol% - bezogen auf die Gesamtmenge an Dicarbonsäure.

Bevorzugt verwendete olefinische Doppelbindungen enthaltende Dicarbonsäuren sind Maleinsäure oder Fumarsäure. Besonders bevorzugt ist die Verwendung von Maleinsäureanhydrid.

Das Äquivalent-Verhältnis von COOH:OH bei der Veresterung der Diole mit den Dicarbonsäuren liegt im allgemeinen zwischen 2:1 und 1:2, bevorzugt zwischen 1,5:1 und 1:1,5. Wie bekannt, kann der Fachmann über das molare Verhältnis von Carboxyl- zu Hydroxylgruppen und den Umsatz bei der Veresterung das Molekulargewicht der resultierenden Polyester einstellen.

nie im erfindungsgemäßen Verfahren eingesetzten Polyester mit Sulfogruppen besitzen ein Molekulargewicht (Zahlenmittel) von 1.000 bis 25.000, vorzugsweise von 2.000 bis 10.000.

Die Veresterung kann auf übliche Weise dadurch erfolgen, daß die Mischung der Diole und Dicarbonsäuren auf Temperaturen von 100 bis 250° C erhitzt und das Reaktionswasser abgetrennt wird.

Da die Dicarbonsäuren mit olefinischen Doppelbindungen bei den hohen Temperaturen der Veresterung zur Polymerisation neigen, ist es zweckmäßig, einen geeigneten Polymerisationsinhibitor zuzufügen. Dem Fachmann geläufige Inhibitoren sind z.B. substituierte oder unsubstituierte Phenole wie Hydrochinon, 2,4-t-Butylphenol und Ionol oder Phenothiazin oder Triphenylphosphit.
Die Polymerisationsinhibitoren können in Mengen von 0,001 bis 1 Gew.% - bezogen auf Gesamtansatz - zugefügt werden.

Zur Beschleunigung der Reaktion können übliche Katalysatoren wie starke Säuren, z.B. Schwefelsäure, Phosphorsäure oder Toluolsulfonsäure in Mengen von 0,1 bis 5 Gew.% - bezogen auf Gesamtansatz - zugefügt werden. Auch der Zusatz von üblichen, die Veresterungsreaktion beschleunigenden Zinnverbindungen, wie z.B. Zinndioctoat, Zinnoxalat, Zinnoxid oder auch elementarem Zinn in der Form von Zinnschliff in Mengen von 0,01 bis 0,2 Gew.% -bezogen auf den Gesamtansatz - ist möglich.

Zur Entfernung des Reaktionswassers kann ein organisches Lösungsmittel verwendet werden, das mit Wasser ein Azeotrop bildet. Für diesen Zweck wohlbekannte Lösungsmittel sind z.B. Toluol, Cyclohexan, n-Hexan oder Xylol.

Bei der sich an die Veresterung anschließenden Addition von Hydrogensulfit-Ionen an die Doppelbindungen der Dicarbonsäure-Einheiten im Polyester verläuft die Reaktion mit cis-substituierten Doppelbindungen schneller. Es kann daher von Vorteil sein, Polyester mit einem möglichst hohem Anteil von cis-substituierten Doppelbindungen herzustellen.

In einer bevorzugten Ausführungsform erreicht man einen besonders hohen Anteil an diesen Doppelbindungen dadurch, daß die Veresterungstemperatur so gewählt wird, daß noch keine nennenswerte Isomerisierung zum thermodynamisch stabileren trans-substituierten Produkt stattfindet. Dies kann dadurch erreicht werden, daß die Veresterung bei relativ niedrigen Temperaturen durchgeführt wird. Dabei wird zur Entfernung des Reaktionswassers ein relativ niedrig siedendes Lösungsmitel wie z.B. Toluol, Cyclohexan oder Benzinfraktionen mit Siedepunkten von 80 bis 150 °C und/oder eine relativ große Menge von z.B. 1 bis 5 Gew.% - bezogen auf die Summe aus Diolen und Dicarbonsäuren - an saurem Veresterungskatalysator verwendet.

Der Anteil an cis- bzw. trans-substituierten Doppelbindungen läßt sich durch dem Fachmann bekannte Methoden, insbesondere durch die Auswertung von ¹H-NMR-Spektren bestimmen. Da die Protonen an cis- oder trans-substituierten Doppelbindungen stark unterschiedliche chemische Verschiebungen aufweisen, kann durch Integration der Signale der relative Gehalt an cis-Doppelbindungen leicht bestimmt werden.

Die Polyester können neben der Veresterung von Dicarbonsäuren oder ihren Anhydriden auch über die Umesterung von Dicarbonsäure-Estern wie z.B. Maleinsäuredimethylester oder - diethylester mit Diolen hergestellt werden. Anstelle des Reaktionswassers wird in diesem Falle der entstehende Alkohol, z.B. Methanol oder Ethanol, abgetrieben.

Die Einführung von Sulfogruppen in die Polyester kann durch Addition von Hydrogensulfit an die olefinischen Doppelbindungen der Dicarbonsäure-Einheiten im Polyester auf an sich bekannte Weise durch Umsetzung mit Alkali- oder Erdalkali- oder Ammonium-Salzen der schwefligen oder pyroschwefligen Säure als Sulfitierungsmittel, wie z.B. Natriumhydrogensulfit oder Natriumbisulfit, erfolgen. Ein mol Natriumbisulfit entspricht 2 mol Hydrogensulfit bei der Sulfitierung. Bevorzugt wird Natriumbisulfit (Na₂S₂O₅) eingesetzt.

Die Menge an Hydrogensulfit oder Bisulfit wird üblicherweise so bemessen,daß 50 bis 200 mol%, bevorzugt 75 bis 100 mol% an Hydrogensulfitionen - bezogen auf Doppelbindungen - für die Reaktion zur Verfügung gestellt werden.

Der Polyester, an dessen Doppelbindungen Hydrogensulfit addiert werden soll, kann in Form einer Lösung in einem mit Wasser zumindest teilweise mischbaren organischem Lösungsmittel vorgelegt werden.

Beispiele für wassermischbare Lösungsmittel sind Ethanol, 1-Propanol, 2-Propanol, 2-Butanol, 1,2-Ethandiol, 1,2-Propandiol, Propylenglykolmonomethylether, Butylglykol, Diethylenglykol, Diethylenglykoldimethylether, N-Methylpyrrolidon und Sulfolan.

Das Sulfitierungsmittel, bevorzugt in Form einer wäßrigen Lösung, wird auf einmal oder kontinuierlich zugegeben und bei Temperaturen von 80 bis 105 °C solange gerührt, bis alle Doppelbindungen Hydrogensulfit addiert haben oder ein konstanter Gehalt an Hydrogensulfit erreicht ist.

Der Hydrogensulfitgehalt kann durch dem Fachmann bekannte Methoden leicht bestimmt werden, z.B. durch Iodometrie.

Es kann zweckmäßig sein, dem Polyester zu Beginn der Sulfitierung einen Emulgator mit Sulfogruppen, bevorzugt einen Ester der Sulfobernsteinsäure in Form seines Salzes mit einem Alkali-Metall, zuzusetzen. Besonders geeignete Ester der Sulfobernsteinsäure sind der Dioctylester oder Tridecylester in Form ihrer Na-Salze. Es ist auch möglich, zu Beginn der Sulfitierung einen Polyester mit Sulfogruppen für das erfindungsgemäße Verfahren, etwa aus einem vorherigen Ansatz, zuzugeben.
Die Menge des zugefügten Emulgators liegt zwischen 0,1 und 10 Gew.%, bevorzugt zwischen 1 und 5 Gew.% bezogen auf den zu sulfitierenden Polyester.

Nach einem weiteren Verfahren kann die Herstellung der Polyester mit Sulfogruppen neben der Veresterung mit einer olefinische Doppelbindungen enthaltenden Dicarbonsäure und anschließender Sulfitierung auch durch Umesterung der Alkoholkomponente mit niedermolekularen Estern der Sulfobernsteinsäure oder ihrer Salze, z.B. mit dem Natrium-Salz des Dimethylsulfobernsteinsäureesters oder des Dioctylsulfobernsteinsäureesters, erfolgen. Der Aufbau der Polyester erfolgt in diesem Fall unter Abspaltung des niedermolekularen Alkohols. Geeignete Umesterungsbedingungen sind Temperaturen von 100 bis 250 °C bei Normaldruck oder vermindertem Druck in Gegenwart üblicher Umesterungskatalysatoren wie Alkalimetallhydroxiden oder -alkoxiden oder Titanverbindungen oder Zinnverbindungen. Gegen Ende der Reaktion kann es zweckmäßig sein, zur Erleichterung der Alkoholentfernung unter vermindertem Druck zu arbeiten.

Das Äquivalent-Verhältnis von Estergruppen COOR zu den Hydroxylgruppen COOR:OH kann zwischen 2:1 und 1:2, bevorzugt zwischen 1,5:1 und 1:1,5 liegen.

Wenn Polyester auf Basis aromatischer, Sulfogruppen enthaltender Dicarbonsäuren oder auf Basis von Sulfobernsteinsäure hergestellt werden sollen, empfiehlt es sich, daß Gemisch aus aromatischer, Sulfogruppen enthaltender Dicarbonsäuren, Dicarbonsäuren ohne Sulfogruppe und Diolen unter Rühren und Inertgas auf Temperaturen von 100 bis 250 °C zu erwärmen und das Reaktionswasser abzutrennen.

Die erfindungsgemäßen Polyester fallen in Form von Pasten oder Lösungen an. Nach Entfernen des Lösungsmittels liegen Festköper oder zähviskose Massen vor.

Das erfindungsgemäße Verfahren eignet sich zur Herstellung von Emulsionspolymerisaten, insbesondere von Emulsionpolymerisaten von Polystyrol, Styrol enthaltenden Copolymeren, z.B. Styrol-Butadien-Copolymeren, Polychloropren oder Chloropren enthaltenden Copolymeren .

Im einzelnen können die Styrol enthaltenden Copolymere ausgewählt sein aus Styrol-Butadien, Acrylnitril-Butadien-Styrol (ABS) oder Styrol-Acrynitril. Die Styrolkomponente ist ausgewählt aus Styrol, α-Methylstyrol, Chlorstyrol oder Vinyltoluol.

Beispiele für Primärstabilisatoren sind aus dem Stand der Technik hinreichend bekannt. Diese Primärstabilisatoren werden ausgewählt aus Seifen, die auf nativen oder synthetischen Fett- (z.B. Kaliumoleat) oder Harzsäuren (z.B. Natriumsalz der Abietinsäure/Rosinsäure) basieren. Der Anteil dieser primären Stabilisatoren bezogen auf die Gesamtmenge des zu stabilisierenden Systems beträgt zwischen 0,01 und 5 Gew.-% und vorzugsweise zwischen 0,01 und 3 Gew.-%.

Der Sulfogruppen enthaltende Polyester als Sekundärstabilisator wird in einem Anteil von 0,01 bis 1 Gew.-% vorzugsweise von 0,1 bis 0,5 Gew.-% bezogen auf die Gesamtmenge des zu stabilisierenden Systems eingesetzt. Der Anteil des Sekundärstabilisators sollte jedoch nicht so hoch sein, daß die Koagulation der Polymerdispersion vollständig unterbunden wird.

Entsprechend der Erfindung weisen Sulfogruppen enthaltende Polyester ein nahezu identisches Stabilisierungsverhalten im Vergleich zu Naphthalinsulfonsäure-Formaldehyd-Kondensaten auf, ohne gleichzeitig die Netzeigenschaften des Octylsulfats zu besitzen.

Synthetische Polymere sind im allgemeinen nicht biologisch abbaubar. Eine Voraussetzung für den biologischen Abbau aller Polymeren ist, daß sie vor der eigentlichen Metabolisierung in kleinere, den Stoffwechselprozessen zugängliche Bruchstücke zerlegbar sind.

Bei den Naphthalinsulfonsäure-Formaldehyd-Kondensaten, die über C-C-Bindungen verknüpft sind, ist eine Spaltung unter Bedingungen wie sie in einer Kläranlage vorliegen, nicht möglich. Polyester enthalten dagegen Esterbindungen, die in einer chemischen oder enzymatischen Reaktion gespalten werden können.

Zur Verwendung als Sekundärstabilisator muß ein Polyester jedoch so stabile Bindungen aufweisen, daß er nicht bereits unter den Bedingungen der Emulsionspolymerisation gespalten wird und damit seine Wirksamkeit verliert. Andererseits dürfen die Bindungen aber auch nicht so stabil sein, daß in der Kläranlage im Kontakt mit aktiven Mikroorganismen keine Bindungsspaltung stattfindet; gefordert ist also ein ausgewogenes Verhältnis von Hydrolysestabilität und -labilität.

Polyester, die ausschließlich Sulfobernsteinsäure- oder Maleinsäure- oder Fumarsäure-Reste enthalten, haben sich als äußerst hydrolysestabil und damit schlecht biologisch abbaubar erwiesen. Durch den Einbau anderer Dicarbonsäurereste kann die Hydrolyse beschleunigt werden, ohne daß die Funktionsfähigkeit des Polyesters als Sekundärstabilisator beeinträchtigt wird.

Die Verwendung der wasserlöslichen oligomeren Sulfobernsteinsäureester im erfindungsgemäßen Verfahren löst die in bekannten Emulsionspolymerisationsverfahren auftretenden Probleme, insbesondere hinsichtlich der biologischen Abbaubarkeit der Stabilisatoren und deren Netzwirkung. Ferner zeigen die im erfindungsgemäßen Verfahren eingesetzten oligomeren Sulfobernsteinsäureester zumindest identische Stabilisierungseigenschaften wie die Naphthalinsulfonsäure-Formaldehyd-Kondensate.

Die nachfolgenden Beispiele beschreiben die Erfindung ohne sie jedoch zu beschränken.

### Beispiele

Alle prozentualen Angaben verstehen sich, sofern nicht anders vermerkt, in Gewichtsprozent.

### Beispiel 1:

194,7 g (1,65 Mol) 1,6-Hexandiol, 139,7 g (1,425 Mol) Maleinsäureanhydrid, 11,0 g (0,075 Mol) Adipinsäure, 6,0 g Toluolsulfonsäurehydrat, 0,5 g Triphenylphosphit und 50 g Toluol wurden in einem 11 Dreihalskolben vorgelegt und aufgeschmolzen. Unter Stickstoffatmosphäre wurde bei 115°C unter Rückfluß gerührt und das entstehende Reaktionswasser azeotrop abdestilliert. Die Reaktion wurde bis zum Erreichen einer Säurezahl < 3 fortgesetzt. Anschließend wurde das Toluol abgezogen und das Produkt auf Raumtemperatur abgekühlt.

150 g des Polyesters und 150 g Dowanol PM (Methoxypropanol) wurden in einem 1 1 Vierhalskolben mit Rührer, Thermofühler, Kühler, Tropftrichter und Stickstoff zuleitung vorgelegt. 0,25 g Diethylhexylsulfosuccinat wurden zugegeben und die Mischung wurde auf 75°C erwärmt. 58,3 g (0,307 Mol) Na₂S₂O₅ wurden in 105 g Wasser gelöst und in die Reaktionsmischung eingetropft. Anschließend wurde 5 Stunden bei 75°C gerührt. Es entstand ein wasserlöslicher Polyester mit 52 % Festkörper.

### Beispiel 2:

Analog Beispiel 1 wurden 97,4 g (0,825 Mol) 1,6-Hexandiol, 143,6 (0,825 Mol) 1,10-Decandiol, 139,7 g (1,425 Mol) Maleinsäureanhydrid und 11,0 g (0,075 Mol) Adipinsäure zu einem Polyester umgesetzt und 150 g davon mit 51,2 g (0,269 Mol) Na₂S₂O₅ sulfitiert.
Es entstand ein Polyester mit 57 % Festkörper.

### Beispiel 3:

Analog Beispiel 1 wurden 171,6 g (1,65 Mol) Neopentylglykol, 139,7 g (1,425 Mol) Maleinsäureanhydrid und 11,0 g (0,075 Mol) Adipinsäure zu einem Polyester umgesetzt und 150 g davon mit 62,5 g (0,329 Mol) Na₂S₂O₅ sulfitiert.
Es entstand ein Polyester mit 59 % Festkörper.

### Beispiel 4:

Analog Beispiel 1 wurden 194,7 g (1,65 Mol) 1,6-Hexandiol, 132,3 g (1,35 Mol) Maleinsäureanhydrid und 21,9 g (0,15 Mol) Adipinsäure zu einem Polyester umgesetzt und 150 g davon mit 54,7 g (0,288 Mol) Na₂S₂O₅ sulfitiert.
Es entstand ein Polyester mit 57 % Festkörper.

### Beispiel 5:

Analog Beispiel 1 wurden 194,7 g (1,65 Mol) 1,6-Hexandiol, 117,6 g (1,2 Mol) Maleinsäureanhydrid und 43,8 g (0,3 Mol) Adipinsäure zu einem Polyester umgesetzt und 150 g davon mit 47,7 g (0,251 Mol) Na₂S₂O₅ sulfitiert.
Es entstand ein Polyester mit 56 % Festkörper.

### Beispiel 6:

Analog Beispiel 1 wurden 660,0 g (1,65 Mol) Dianol 22 (Additionsprodukt von 2 mol Ethylenoxid an Bisphenol A), 139,7 g (1,425 Mol) Maleinsäureanhydrid und 11,0 g (0,075 Mol) Adipinsäure zu einem Polyester umgesetzt und 150 g davon mit 24,6 g (0,13 Mol) Na₂S₂O₅ sulfitiert.
Es entstand ein Polyester mit 60 % Festkörper.

### Vergleichsbeispiel 1:

Analog Beispiel 1 wurden 194,7 g (1,65 Mol) 1,6-Hexandiol und 147 g (1,5 Mol) Maleinsäureanhydrid zu einem Polyester umgesetzt und 150 g davon mit 59,0 g (0,31 Mol) Na₂S₂O₅ sulfitiert.
Es entstand ein Polyester mit 52 % Festkörper.

### Test der Stabilisierungseigenschaften:

Die Eignung der oligomeren Sulfobernsteinsäureester wurde mit Hilfe eines analogen Verfahrens, wie in DE-OS-2 210 957 beschrieben in einer Versuchsreihe festgestellt. Dabei wurde ein ausschließlich mit Kaliumoleat stabilisierter Styrol-Latex in Gegenwart unterschiedlicher Mengen an Sekundärstabilisator mit Essigsäure angesäuert und die Stabilität des Systems anhand des Koagulatgehalts beurteilt (vgl. Ind. Eng. Chem.,40 (1948) 2193)).

Ein Polystyrol-Latex wurde aus Styrol, Kaliumoleat und Wasser unter Einsatz von 4,4'-Azobis(4-cyanovaleriansäure) als Initiator polymerisiert. Es wurde eine Latex mit 30 % Festkörper und einer Teilchengröße von ca. 100 nm erhalten. 50 ml des Latex koagulierten bei Zugabe 2,5 ml 10 %iger Essigsäure vollständig, was auf die Umwandlung des Kaliumoleats in ölsäure und dem damit verbundenen Verlust der Stabilisierung zurückzuführen ist. Analog den Versuchen in der DE-OS-2 210 957 werden dem Latex verschiedene Konzentrationen an Sekundärstabilisator zugesetzt. Über den Gehalt an Koagulat nach dem Ansäuern kann festgestellt werden, wie gut ein Sekundärstabilisator für diese Anwendung geeignet ist.

Die Ergebnisse sind in Tabelle 1 zusammengefaßt.

**Tabelle 1:**

| Stabilisierung gegen Koagulation | | | |
|---|---|---|---|
| Costabilisator | Stabilität bei verschiedenen Konzentrationen des Costabilisators | | |
| | 0,25 % | 0,50 % | 1,0 % |
| Lomar LS | 100% koag. | stabil, nach 3 Tagen koag. | stabil <1% Koag. |
| | | | |
| Lomar PWA | 100% koag. | stabil, nach 1 Tag koag. | stabil <1% Koag. |
| | | | |
| Texapon CPS | stabil <1% Koag. | stabil <1% Koag. | stabil <1% Koag. |
| | | | |
| Beispiel 1 | 100% koag. | stabil <1% Koag. | stabil <1% Koag. |
| | | | |
| Beispiel 2 | 100% koag. | stabil, nach 1 Tag koag. | stabil <1% Koag. |
| | | | |
| Beispiel 3 | 100% koag. | stabil, nach 1 Tag koag. | stabil <1% Koag. |
| | | | |
| Beispiel 6 | 100% koag. | 100% koag. | stabil <1% Koag. |
| Legende zu Tabelle 1: Lomar LS Naphthalinsulfonsäure-Formaldehyd-Kondensat, Na-Salz Lomar PWA Naphthalinsulfonsäure-Formaldehyd-Kondensat, NH₄-Salz Texapon CPS Octylsulfat | | | |

Die Hydrolysestabilität wurde dadurch bestimmt, daß 5 %ige wäßrige Lösungen der Polyester bei 50 °C gelagert wurden. Nach den angegebenen Zeiten wurden pH-Wert und Säurezahl (SZ) bestimmt. Ansteigende Säurezahl und/oder pH-Wert zeigen Hydrolyse an.

**Tabelle 2:**

| Hydrolyse-Stabilität | | | |
|---|---|---|---|
| | Beispiel 1 | Beispiel 2 | Vergleichsbeispiel |
| | pH-Wert/SZ | pH-Wert/SZ | pH-Wert/SZ |
| Start | 5,68/0,10 | 5,12/0,12 | 6,22/0,07 |
| | | | |
| 1 Woche | 5,15/0,15 | 4,73/0,17 | 5,91/0,06 |
| | | | |
| 3 Wochen | 4,69/0,36 | 4,07/0,47 | 5,45/0,08 |
| | | | |
| 15 Wochen | 3,07/7,27 | 2,26/10,66 | 4,52/0,80 |

Die biologische Abbaubarkeit wurde im Zahn-Wellens-Test (Testmethode OECD 302 B) gemessen.
Die Ergebnisse sind in Tabelle 3 dargestellt.

**Tabelle 3:**

| biologische Abbaubarkeit im Zahn-Wellens-Test | | | | | |
|---|---|---|---|---|---|
| | Konz. mg/l | biologische Abbaubarkeit in % nach | | | |
| | | 7 Tagen | 14 Tagen | 21 Tagen | 28 Tagen |
| Bsp.1 | 250 | 50 | 70 | 78 | 83 |
| | | | | | |
| Bsp.1 | 500 | 21 | 64 | 78 | 82 |

Mit dem im Zahn-Wellens Test voradaptierten Inokulum wurde im Geschlossenen Flaschentest (GF-Test nach der OECD-Methode 301 D) die biologische Abbaubarkeit des Polyesters nach Beispiel 1 vergleichend zum Polyester nach Vergleichsbeispiels 1 geprüft.
Die Ergebnisse sind in Tabelle 4 dargestellt.

**Tabelle 4:**

| Biologische Abbaubarkeit im GF-Test | | | | | |
|---|---|---|---|---|---|
| | Konz. mg/l | biologische Abbaubarkeit in % nach | | | |
| | | 7 Tagen | 14 Tagen | 21 Tagen | 28 Tagen |
| Bsp.1 | 2 | 8 | 14 | 32 | 50 |
| | | | | | |
| Bsp.1 | 5 | 7 | 25 | 27 | 51 |
| | | | | | |
| VBsp.1 | 2 | 0 | 3 | 0 | 34 |
| | | | | | |
| VBsp.1 | 5 | 0 | 4 | 0 | 36 |

Der direkte Vergleich zeigt die verbessserte Abbaubarkeit des erfindungsgemäßen Polyesters.

## Patentansprüche

1. Verfahren zur Herstellung von Emulsionspolymerisaten in Gegenwart eines Primärstabilisators aus Seife, basierend auf nativen oder synthetischen Fett- oder Harzsäuren und eines Sekundärstabilisators, dadurch gekennzeichnet, daß als biologisch abbaubarer Sekundärstabilisator Sulfogruppen enthaltende Polyester aus
a) Diolen
b) Dicarbonsäuren mit olefinischen Doppelbindungen, ausgewählt aus Malein- und/oder Fumarsäure, wobei 50 - 100 mol% der im Polyester enthaltenen Dicarbonsäuren mit Doppelbindungen sulfitiert sind, in Mengen von 99 bis 70 mol % - bezogen auf die Gesamtmenge an Dicarbonsäuren - und
c) Dicarbonsäuren ohne olefinische Doppelbindungen und ohne Sulfogruppen mit 2, 3 oder 5 - 18 C-Atomen in Mengen von 1 bis 30 mol % - bezogen auf die Gesamtmenge an Dicarbonsäure - eingesetzt werden.

2. Verfahren nach Anspruch 1, dadurch gekennzeichnet, daß Diole mit 2 bis 10 C-Atomen oder deren Additionsprodukte mit 1 bis 5 mol Ethylen- und/oder Propylenoxid verwendet werden.

3. Verfahren nach den Ansprüchen 1 und 2, dadurch gekennzeichnet, daß als Diole Additionsprodukte von Ethylen- und/oder Propylenoxid an difunktionelle Phenole verwendet werden.

4. Verfahren nach den Ansprüchen 1 bis 3, dadurch gekennzeichnet, daß Malein- und/oder Fumarsäure in Mengen von 99 bis 90 mol % und Dicarbonsäuren ohne Doppelbindungen und ohne Sulfogruppen in Mengen von 1 bis 10 mol % - jeweils bezogen auf die Gesamtmenge an Dicarbonsäure - eingesetzt werden.

5. Verfahren nach den Ansprüchen 1 bis 4, dadurch gekennzeichnet, daß das Äquivalentverhältnis COOH:OH zwischen 2:1 und 1:2, bevorzugt zwischen 1,5:1 und 1:1,5 liegt.

6. Verfahren nach einem oder mehreren der Ansprüche 1 bis 5 zur Herstellung von Emulsionspolymerisaten von Polystyrol, Styrol enthaltenden Copolymeren, Polychloropren oder Chloropren enthaltenden Copolymeren.

7. Verfahren nach Anspruch 6, dadurch gekennzeichnet, daß die Styrol enthaltenden Copolymere ausgewählt sind aus Acrylnitril-Butadien-Styrol (ABS) und Styrol-Acrylnitril, wobei die Styrolkomponente ausgewählt ist aus Styrol, α-Methylstyrol, Chlorstyrol oder Vinyltoluol.

8. Verfahren nach Anspruch 7, dadurch gekennzeichnet, daß der Primärstabilisator in einem Anteil von 0,01-5 Gew.-%, bezogen auf die Gesamtmenge des zu stabilisierenden Systems, eingesetzt wird.

9. Verfahren nach einem oder mehreren der Ansprüche 1 bis 8, dadurch gekennzeichnet, daß der Sekundärstabilisator in einem Anteil von 0,01-1 Gew.-% auf die Gesamtmenge des zu stabilisierenden Systems eingesetzt wird.

## Claims

1. A process for the production of emulsion polymers in the presence of a primary stabilizer of soap based on native or synthetic fatty or resinic acids and a secondary stabilizer, characterized in that polyesters containing sulfo groups of
a) diols,
b) dicarboxylic acids containing olefinic double bonds selected from maleic and/or fumaric acid, 50 to 100 mole-% of the dicarboxylic acids containing double bonds present in the polyester being sulfited, in quantities of 99 to 70 mole-%, based on the total quantity of dicarboxylic acids, and
c) dicarboxylic acids with no olefinic double bonds and with no sulfo groups containing 2, 3 or 5 to 18 carbon atoms in quantities of 1 to 30 mole-%, based on the total quantity of dicarboxylic acid,
are used as the biologically degradable secondary stabilizer.

2. A process as claimed in claim 1, characterized in that diols containing 2 to 10 carbon atoms or adducts thereof with 1 to 5 moles of ethylene and/or propylene oxide are used.

3. A process as claimed in claims 1 and 2, characterized in that adducts of ethylene and/or propylene oxide with dihydric phenols are used as diols.

4. A process as claimed in claims 1 to 3, characterized in that maleic and/or fumaric acid are used in quantities of 99 to 90 mole-% while the dicarboxylic acids with no double bonds or sulfo groups are used in quantities of 1 to 10 mole-%, based on the total quantity of dicarboxylic acid.

5. A process as claimed in claims 1 to 4, characterized in that the equivalent ratio of COOH to OH is from 2:1 to 1:2 and preferably from 1.5:1 to 1:1.5.

6. A process as claimed in one or more of claims 1 to 5 for the production of emulsion polymers of polystyrene, styrene-containing copolymers, polychloroprene or chloroprene-containing copolymers.

7. A process as claimed in claim 6, characterized in that the styrene-containing copolymers are selected from acrylonitrile/butadiene/styrene (ABS) and styrene/acrylonitrile, the styrene component being selected from styrene, α-methyl styrene, chlorostyrene or vinyl toluene.

8. A process as claimed in claim 7, characterized in that the primary stabilizer is used in a quantity of 0.01 to 5% by weight, based on the total quantity of the system to be stabilized.

9. A process as claimed in one or more of claims 1 to 8, characterized in that the secondary stabilizer is used in a quantity of 0.01 to 1% by weight, based on the total quantity of the system to be stabilized.

## Revendications

1. Procédé de préparation de polymères en émulsion, en présence d'un stabilisant primaire de savon, à base d'acides gras ou d'acides résiniques natifs ou synthétiques et d'un stabilisant secondaire, caractérisé en ce que l'on utilise comme stabilisant secondaire biodégradable, des polyesters renfermant des groupes sulfo constitués
a) de diols
b) d'acides dicarboxyliques comportant des doubles liaisons oléfiniques, sélectionnés parmi l'acide maléique et/ou fumarique, 50 à 100 moles % des acides dicarboxyliques contenus dans le polyester étant sulfités par des doubles liaisons, en proportions de 99 à 70 moles % (par rapport à la quantité totale d'acide dicarboxylique) et
c) d'acides dicarboxyliques sans doubles liaisons oléfiniques et sans groupes sulfo comportant 2, 3 ou 5 à 18 atomes de C en proportions de 1 à 30 moles %, par rapport à la quantité totale d'acide dicarboxylique.

2. Procédé selon la revendication 1, caractérisé en ce que l'on utilise des diols comportant 2 à 10 atomes de C ou des produits d'addition de ceux-ci avec 1 à 5 moles d'oxyde d'éthylène et/ou de propylène.

3. Procédé selon les revendications 1 et 2, caractérisé en ce que l'on utilise comme diols, des produits d'addition d'oxyde d'éthylène et/ou de propylène à des phénols difonctionnels.

4. Procédé selon les revendications 1 à 3, caractérisé en ce que l'on met en oeuvre de l'acide maléique et/ou fumarique en proportions de 99 à 90 moles % et des acides dicarboxyliques sans doubles liaisons et sans groupes sulfo, en proportions de 1 à 10 moles % (dans chaque cas, par rapport à la quantité totale d'acide dicarboxylique).

5. Procédé selon les revendications 1 à 4, caractérisé en ce que le rapport d'équivalence COOH:OH est compris entre 2:1 et 1:2, de préférence entre 1,5:1 et 1:1,5.

6. Procédé selon une ou plusieurs des revendications 1 à 5 pour la préparation de polymères en émulsion de polystyrène, de copolymères contenant du styrène et de copolymères renfermant du polychloroprène ou du chloroprène.

7. Procédé selon la revendication 6, caractérisé en ce que les copolymères contenant du styrène sont sélectionnés parmi l'acrylonitrile-butadiène-styrène (ABS) et le styrène-acrylonitrile, le composant styrène étant sélectionné parmi le styrène, l'α-méthylstyrène, le chlorostyrène ou le toluène vinylique.

8. Procédé selon la revendication 7, caractérisé en ce que le stabilisant primaire est mis en oeuvre dans une proportion de 0,01 à 5 % en poids par rapport à la quantité totale du système à stabiliser.

9. Procédé selon une ou plusieurs des revendications 1 à 8, caractérisé en ce que le stabilisant secondaire est mis en oeuvre dans une proportion de 0,01 à 1 % en poids par rapport à la quantité totale du système à stabiliser.
